# EUROPEAN PATENT APPLICATION

(11) **EP 0 881 140 A1**
(43) Date of publication of application: **02.12.1998**
(21) Application number: 97303632.0
(22) Date of filing: 29.05.1997
(51) Int. Cl.: B62J 6/00, B60Q 1/32

(54) **Illuminated fuel tank or shell**

(71) Applicant: Barry, James E., Coral Springs, Florida 33065 (US)
(72) Inventor: Barry, James E., Coral Springs, Florida 33065 (US)
(74) Representative: Crawford, Andrew Birkby

(57) **Abstract**

Disclosed a lighting device is provided underneath the fuel tank to help illuminate the area in front and to the sides of the motorcycle. The lighting device is provided with a reflective surface area which reflects light received a light bulb in the direction in front of the motorcycle and to the side of the motorcycle corresponding to the side of the fuel tank to which the motorcycle is attached.

## Description

The present invention relates generally to motorcycles and more particularly to installing illumination means within the fuel tank area of a motorcycle.

The motor-cycle has been a means of fun and relatively inexpensive way of travelling for many years. Recently, the motorcycle has found increased popularity and has become widely accepted by a substantial portion of the purchasing public as their primarily means of traveling. Accordingly, sales figures for various motorcycle companies have reached new highs in recent years.

One problem which has continuously plagued motorcyclist is the visibility of the motorcycle while riding especially during night travel. This problem is further emphasized by the fact that many motorcyclist wear dark clothing when riding. Thus, many accidents involving motorcycles are the result of the nonmotorcyclist failing to see the motorcyclist. As the motorcycle itself provides minimal, if any, protection to the motorcyclist many accidents involving motorcycles result in serious bodily injury or even death to the motorcyclist. Such severe consequences often occur at relatively low travelling speeds.

In the automobile and truck industry the advent of neon lighting, ranging in various colours, around the license plate and/or under the flame of the vehicle has recently been used to enhance the visibility of the vehicle during nighttime driving as well as acting as novelty device. However, the use of neon lighting is not as readily adaptable or applicable to motorcycles.

Another problem is the fact that many motorcyclists remove or disconnect the turn signals from their motorcycle feeling that the signals take away from the aesthetic features of the motorcycles as well as their own individuality. Thus, frequently no indication is given to other vehicles on the road when these motorcyclists are preparing to turn which in turn results in unnecessary accidents.

Additionally, conventional motorcycle headlights merely illuminates the area approximately 7.5 to 8 metres (25 feet) ahead of the motorcycle. Thus, the rider is normally not aware of the surface conditions on either side of the motorcycle or directly in front of the motorcycle. Several problems immediately become apparent from the lack of illumination around the motorcycle, including the inability to detect glass, sand, tires, or other items which may be disposed on the surface to which the rider is approaching or is about to turn onto. As such, serious injuries may occur which may have been prevented by improved or proper illumination around the motorcycle.

Thus, what is needed in the art is a device or apparatus that allows for better illumination and visibility of the motorcycle, as well as for the rider of the motorcycle, during night travelling. In addition, the device must be safe and not increase the chance of serious injury. It is therefore to the effective resolution of the aforementioned problems and shortcomings that the present invention is directed.

The present invention provides an external illumination device disposed underneath a motorcycle fuel tank or motorcycle body shell to provide light to an adjacent side and front ground area to help aid in the visibility of the motorcycle while also improving the visibility of the surroundings to a motorcyclist while he or she is riding the motorcycle; the fuel tank or shell having a bottom surface, said external illumination device comprising:
a body member having an outer surface and an inner surface, the inner surface of said body member provided with a reflective member, the outer surface of said body member attached to the bottom surface of said motorcycle fuel tank; and
an illumination member connected to said body member; and
   wherein said illumination member provides light which is reflected by the reflective member to illuminate the adjacent side ad front ground area around the motorcycle.

The lighting member is preferably attached to the bottom surface of each side of the motorcycle tank by conventional means, such as velcro, tape, gluing, adhesives, etc. In the invention the lighting means illuminates the side and front areas adjacent the motorcycle to allow the rider to have better familiarity with the surroundings during nighttime travel.

In this invention the original shape of the fuel tank is not altered. Therefore, the motorcycle retains its original look.

Advantages of embodiments of the present invention includes:
the enhancement of the visibility of a motorcycle during nighttime travel while not altering the original look of the motorcycle;
additional safety to a motorcyclist during nighttime travel;
a reduction in the number of motorcycle related accidents;
an increase in the aesthetic beauty of a motorcycle;
the provision of additional lighting on a motorcycle; and
the provision of additional lighting around the adjacent front and side area of a motorcycle.

Other objects and advantages of this invention will become apparent from the following description taken in conjunction with the accompanying drawings wherein set forth by way of illustration and example, certain embodiments of this invention. The drawings constitute a part of this specification and include exemplary embodiments of the present invention and illustrate various objects and features thereof.

The invention may be better understod by reference to the drawings, in which:

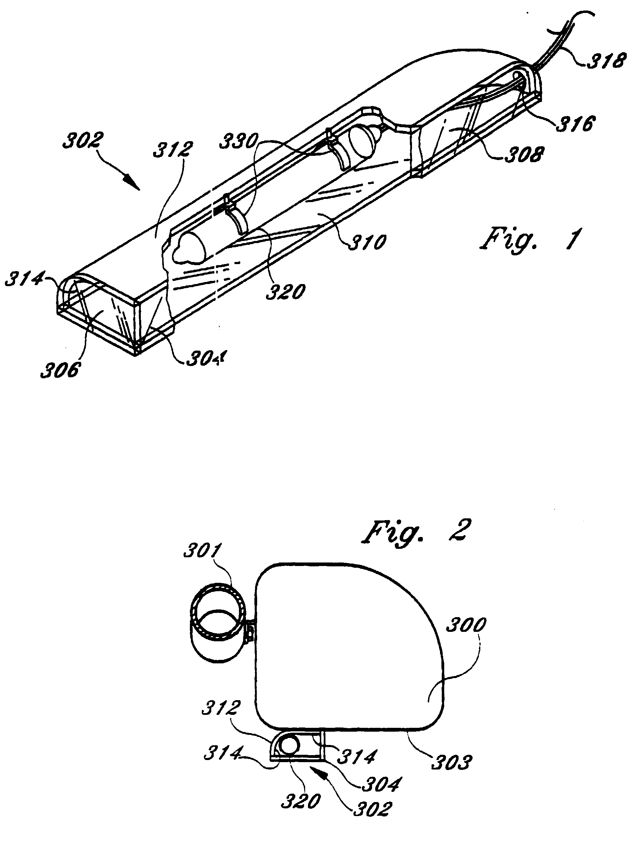

Figure 1 is a perspective view of an embodiment of the present invention;

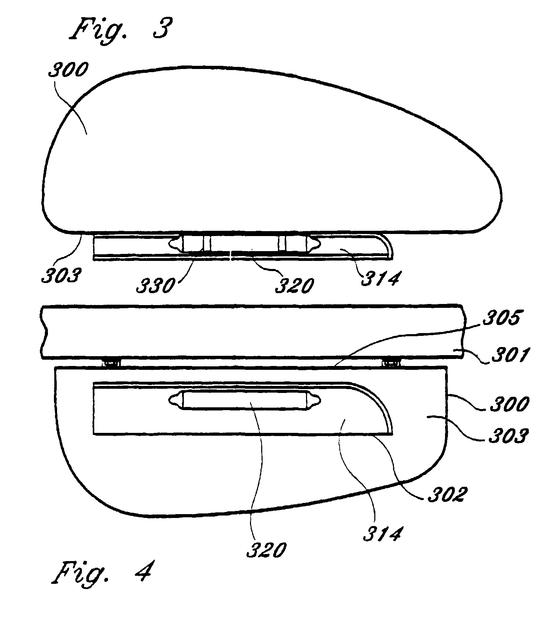

Figure 2 is a front elevational view illustrating the same embodiment of the present invention attached to a left tank of a split motorcycle fuel tank;
Figure 3 is a side elevational view illustrating the same embodiment of the present invention attached to a motorcycle fuel tank; and
Figure 4 is a bottom plan view illustrating the same embodiment of the present invention attached to a motorcycle fuel tank.

In the illustrated embodiment, an external lighting means 302 is provided underneath a motorcycle fuel tank 300, which is attached to the motorcycle frame 301, to help illuminate the area in front and to the sides of the motorcycle. It is to be understood that external lighting means 302 can be utilised with a single fuel tank or a split fuel tank. Preferably, external lighting means 302 are provided on both sides of the underneath portion of tank 300 to illuminate both side areas adjacent to the motorcycle.

The location of the fuel tank on some brands of motorcycle is different from that mentioned above. Such motorcycles have the fuel tank underneath the seat of the motorcycle and place a hollow shell resembling a fuel tank between the seat and the forks. These hollow shells are also within the scope of this invention and references to "tank" herein shall be considered to include such hollow shells.

Lighting means 302 is attached to a bottom surface 303 of each side of motorcycle tank 300 by conventional means, such as velcro, tape, gluing, adhesives, etc. Preferably, lighting means 302 is attached to bottom surface 303 as close as possible to the motorcycle frame or along inner edge 305 of bottom surface 303. However, such is not limiting and lighting means may be attached along any area of bottom surface 303.

External lighting means 302 includes an L-shaped transparent member 304, preferably constructed from glass or plastic, which is attached to a curved body member 312. However, other materials for transparent member 304 may be utilised and are within the scope of the invention. Transparent member 304 includes transparent surfaces 306, 308 and 310, while curved body member 312 is provided with an reflective inner surface area 314. Reflective surface 314 may be a foil member or a shiny glossy inner surface. However, such is not limiting and any reflective means may be provided for inner surface 314 of body member 312.

Due to the predefined curved shape of body member 312, surface 314 reflects light received from illumination member 320 through transparent surfaces 306, 308 and 310 to illuminate the side and front areas adjacent the motorcycle to allow the rider to have better familiarity with the surroundings during nighttime travel. Lighting means 302 illuminates the entire side and front of the motorcycle and the surrounding area adjacent thereto and also highlights the chrome of the motorcycle engine to provide additional visibility of the motorcycle for safety purposes.

An aperture 316 is provided in curved body member for passing through a cord 318 which is attached at one end to illumination member 320 and at the other end to the motorcycle circuitry (not shown) to provide power to illumination member 320. Alternatively, illumination member 320 may be powered by other conventional means including, but not limited to, a wheel generator or battery means, such as a 9 volt battery (not shown), to eliminate the need for cord 318 and aperture 316. Transparent member 304 can be removably attached to body member 312 to allow for replacement of bulb 320. Alternatively, transparent member 304 is permanently attached to body member 312, and the entire external lighting means 302 is replaced once illumination member 320 has burned out.

Illumination member 320 can be a light bulb or low voltage fluorescent tube. Furthermore, it is to be understood that other illumination means may be utilised which will illuminate the side and front areas adjacent the motorcycle. Clips 330 can be attached by conventional means, to body member 312, to securely hold illumination member 320 in place. Other holding means, such as brackets, adhesives, etc., may be provided in lieu of clips 330, and are considered within the scope of the present invention.

Illumination member 320 may be wired to be flashing or on while the motorcycle engine is turned on, or can be wired to be flashing or on only in certain situations, such as wiring to the turn signal circuitry. When on, lighting means 302 gives the motorcycle a wider image to help other drivers see the motorcycle during nighttime travel, while also improving the visibility of the adjacent surroundings to the motorcyclist during nighttime travel, both resulting in increased safety to the motorcyclists, as well as other drivers and civilians.

It is to be understood that while one embodiment of the invention has been illustrated and described it is not to be limited to the specific forms or arrangement of parts herein described and shown. It will be apparent to those skilled in the art that various changes may be made without departing from the scope of the invention and the invention is not to be considered limited to what is shown in the drawings and described in the specification.

## Claims

1. An external illumination device (302) disposed underneath a motorcycle fuel tank (300) or motorcycle body shell to provide light to an adjacent side and front ground area to help aid in the visibility of the motorcycle while also improving the visibility of the surroundings to a motorcyclist while he or she is riding the motorcycle, the fuel tank (300) or shell having a bottom surface, said external illumination device (302) comprising:
a body member (312) having an outer surface and a inner surface, the inner surface of said body member provided with a reflective member (314), the outer surface of said body member attached to the bottom surface of said motorcycle fuel tank (300) or shell: and
an illumination member (320) connected to said body member; and
wherein said illumination member (320) provides light which is reflected by the reflective member (314) to illuminate the adjacent side and front ground area around the motorcycle.

2. The external illumination device of Claim 1, wherein said illumination member (320) is removably attached to said body member (312) by at least one clip member (330), said clip member attached to said body member and depending therefrom.

3. The external illumination device of Claim 1 or 2, further including a transparent member (304) attached to said body member (312), wherein the light reflected by said reflective member is passed through the transparent member.

4. The external illumination device of Claim 1, 2 or 3, wherein said body member (312) is curved shaped.

5. The external illumination device of Claim 1, 2, 3 or 4, wherein said body member (312) is removably attached to he bottom surface of said motorcycle fuel tank (300) or shell..

6. The external illumination device of Claim 1 or 5, wherein said body member (312) is attached adjacent an inner edge of the bottom surface of said motorcycle fuel tank (300) or shell.

7. The external illumination device of any preceding claim, wherein said illumination member (320) is replaceable.
